# EUROPÄISCHE PATENTSCHRIFT

(11) **EP 2 449 888 B1**
(45) Veröffentlichungstag und Bekanntmachung des Hinweises auf die Patenterteilung: **14.01.2015**
(21) Anmeldenummer: 12150898.0
(22) Anmeldetag: 24.06.2009
(51) Int. Cl.: A23L 1/0522, A23L 1/09, A23C 20/02

(54) **Käseimitat**
Imitation cheese
Imitation de fromage

(30) Priorität: 26.06.2008 DE 102008030440
(43) Veröffentlichungstag der Anmeldung: 09.05.2012
(62) Teilanmeldung aus: 09008258.7
(73) Patentinhaber: Emsland-Stärke GmbH, 49824 Emlichheim (DE)
(72) Erfinder: Herrmann, Martina, 49824 Emlichheim (DE)
(74) Vertreter: Scholz, Volker

(56) Entgegenhaltungen:
- WO-A-00/44241
- WO-A-2004/064540
- DE-A1- 19 912 009

## Beschreibung

Die vorliegende Erfindung betrifft ein Käseimitat.

Aus dem Stand der Technik ist beispielsweise eine auf Stärke basierte, gelatinisierte Süßigkeit aus der EP 1645196 B1 bekannt, die eine verflüssigte und stabilisierte Hülsenfrucht-Stärke mit einem Gehalt an Amylose von 25 bis 40% und ein oder mehrere Süßungsmittel enthält.

Aus WO 2004/064540 A1 ist ein Käseimitat bekannt, das ein wässriges Gel auf Basis von enzymatisch verflüssigter Erbsenstärke enthält.

Bei der Herstellung einer solchen Süßigkeit oder eines Käseimitats auf Basis von Stärke kann jedoch noch die Gelierzeit verkürzt und die Verarbeitbarkeit insgesamt verbessert werden.

Es ist somit eine Aufgabe der vorliegenden Erfindung, ein Käseimitat bereitzustellen, das die Nachteile des Stands des Technik überwindet, insbesondere eine verkürzte Gelierzeit und eine insgesamt verbesserte Verarbeitbarkeit ermöglicht.

Diese Aufgabe wird erfindungsgemäß gelöst durch ein Käseimitat nach Anspruch 1.

Bevorzugt ist die Hülsenfrucht-Stärke eine Erbsenstärke und/oder die modifizierte Stärke anderen Ursprungs eine verflüssigte, stabilisierte und/oder vernetzte Stärke.

Auch wird vorgeschlagen, dass die Stärke anderen Ursprungs Kartoffelstärke und/oder Tapiokastärke umfasst.

Ebenfalls kann vorgesehen sein, dass zumindest eine der Stärken getrocknet und/oder vorverkleistert ist.

Zumindest eine der Stärken kann über Sprühtrocknung hergestellt werden.

Ferner ist bevorzugt, dass zumindest eine der Stärken dextriniert ist.

Auch ist besonders bevorzugt, dass das Käseimitat 0,5 bis 60 Gew.-%, bevorzugter 0,5 bis 25 Gewichtsprozent an Stärke enthält.

Überraschend wurde gefunden, dass eine entsprechende Mischung vorteilhaft bei der Herstellung von Käseimitaten eingesetzt werden kann, da die Verwendung derselben zu einer schnelleren Gelierung und einer besseren Verarbeitbarkeit insgesamt führt. Das Mischungsverhältnis liegt bei 99:1 bis 1:99 für die Mischung aus verflüssigter Hülsenfrucht-Stärke und modifizierter Stärke anderen Ursprungs.

Wird für die eine verflüssigte Hülsenfrucht-Stärke beispielsweise Erbsenstärke eingesetzt, soll die Stärke anderen Ursprungs dann auch eine andere Hülsenfrucht-Stärke als Erbsenstärke umfassen können.

Im Rahmen der vorliegenden Erfindung ist eine verflüssigte Hülsenfrucht-Stärke eine verflüssigte, jedoch nicht stabilisierte Stärke.

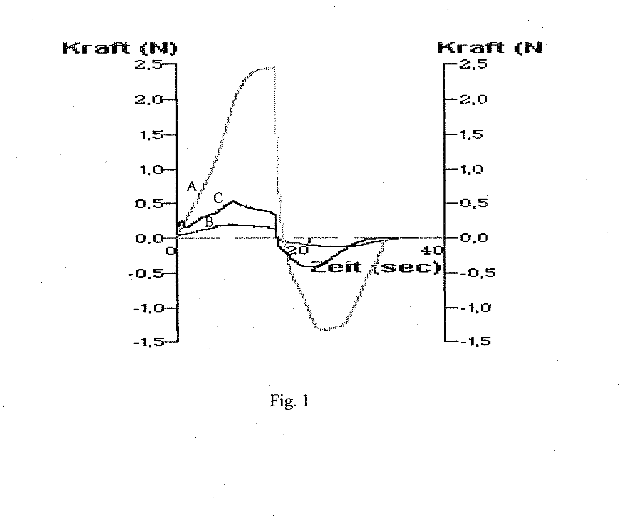

Figur 1 zeigt Texturmessungen unterschiedlicher verflüssigter Stärken mit einem Texture Analyzer, wobei die mit "A" bezeichnete Kurve die Texturmessung für eine erfindungsgemäße eingesetzte Stärke zeigt, Kurve "B" die Messung für eine verflüssigte Weizenstärke und Kurve "C" die Messung für eine modifizierte Kartoffelstärke.

Die Testbedingungen waren wie folgt: Vorgeschwindigkeit: 1,5 mm/sek; Testgeschwindigkeit: 1,0 mm/sek; Rückgeschwindigkeit: 1,0 mm/sek; Kraft: 100,0 g; Weg: 10,0 mm; Verformung/Strain: 10,0%; Auslösewert: Auto (Kraft); Auslösekraft: 5,0 g; Werkzeug: P/2N-Nadel; Messungen pro Sekunde: 200.

Zur Messung wurden die Stärkeprodukte in einer 15-%igen Konzentration in Wasser vermischt und aufgekocht bis 95°C, bei 95°C für 10 Minuten gehalten und anschließend auf 25°C abgekühlt. Die Lösung wurde dann bei Raumtemperatur (etwa 22°C) für zwei Stunden stehengelassen und die Textur dann mit einem Texture Analyzer gemessen. Die Stärkelösung gelierte während der Standzeit bei Raumtemperatur.

Figur 1 zeigt die Ergebnisse der Texturmessung. Für die erfindungsgemäß eingesetzte Stärke wird eine schnellere Gelierung festgestellt, da hier der größte Kraftaufwand für die Texturmessung erforderlich ist.

Ein erfindungsgemäßes Käseimitat kann mit den folgenden Bestandteilen hergestellt werden:

| | |
|---|---|
| Verflüssigte und stabilisierte Kartoffelstärke | 2,2% |
| Verflüssigte Erbsenstärke | 14,9% |
| Salz | 1,3% |
| Wasser | 59,7% |
| Zitronensäure | 0,2% |
| Farbstoff | 0,1% |
| Pflanzliches Fett | 21,6% |
| Käse-Aroma | nach Bedarf |

Zunächst wird das Fett in einem Stephan-Mixer erhitzt, bis es geschmolzen ist. Die Trockenstoffe werden mit Wasser vermischt und dann zum Fett zugegeben. Langsam wird bis auf eine Temperatur von oberhalb von 80°C erhitzt und bei dieser Temperatur für 5 Minuten gehalten. Anschließend kann die Masse abgefüllt und dann abgekühlt werden.

## Patentansprüche

1. Käseimitat, enthaltend eine Mischung aus einer verflüssigten, jedoch nicht stabilisierten Hülsenfrucht-Stärke und zumindest einer modifizierten Stärke anderen Ursprungs, wobei in der Mischung die verflüssigte, jedoch nicht stabilisierte Hülsenfrucht-Stärke und die modifizierte Stärke anderen Ursprungs in einem Mischungsverhältnis von 99:1 bis 1:99 Gewichtsprozent (auf Basis der gesamten Mischung) vorliegen.

## Claims

1. Imitation cheese, containing a mixture of a liquefied but not stabilized pulse crop starch and at least one modified starch of different origin, wherein, in the mixture, the liquefied but not stabilized pulse crop and the modified starch of different origin are present in a mixture ratio of 99:1 to 1:99 percent by weight (on the basis of the total mixture).

## Revendications

1. Imitation de fromage contenant un mélange constitué d'un amidon de légumineuse liquéfié mais non stabilisé, et d'au moins un amidon modifié d'une autre orig.ine, dans laquelle l'amidon de légumineuse liquéfié mais non stabilisé et l'amidon modifié d'une autre origine sont présents dans le mélange en un rapport de mélange de 99/1 à 1/99 % en poids (sur la base du mélange total).
